# EUROPÄISCHE PATENTSCHRIFT

(11) **EP 0 753 987 B1**
(45) Veröffentlichungstag und Bekanntmachung des Hinweises auf die Patenterteilung: **16.12.1998**
(21) Anmeldenummer: 96110620.0
(22) Anmeldetag: 01.07.1996
(51) Int. Cl.: H05B 41/29

(54) **Schaltungansordnung zum Betrieb elektrischer Lampen und Betriebsverfahren für elektrische Lampen**
Circuit and method of operation for electric lamps
Circuit et procédé d'opération de lampes électriques

(30) Priorität: 12.07.1995 DE 19525123; 17.07.1995 DE 19526039
(43) Veröffentlichungstag der Anmeldung: 15.01.1997
(73) Patentinhaber: Patent-Treuhand-Gesellschaft für elektrische Glühlampen mbH, 81543 München (DE)
(72) Erfinder: Rudolph, Bernd, 81375 München (DE)

(56) Entgegenhaltungen:
- EP-A- 0 146 683
- EP-A- 0 276 460
- DE-A- 4 334 076

## Beschreibung

Die Erfindung betrifft eine Schaltungsanordnung zum Betrieb elektrischer Lampen gemäß dem Oberbegriff des Patentanspruchs 1 und ein Betriebsverfahren für elektrische Lampen gemäß dem Oberbegriff des Patentanspruchs 14.

Eine derartige Schaltungsanordnung ist beispielsweise in der Patentschrift EP-B 0 276 460 offenbart. Sie dient zum Betrieb einer Niederdruckentladungslampe und weist einen Wechselrichter auf, der aus zwei alternierend schaltenden, in einer Halbbrücke angeordneten Transistoren besteht. Diese Schaltungsanordnung besitzt eine Sicherheitsabschaltung, die den Wechselrichter bei anomalen Betrieb stillegt. Die Abschaltvorrichtung besteht im wesentlichen aus einem Thyristor, der parallel zur Steuerelektrode eines Schalttransistors des Wechselrichters geschaltet ist, und aus einer Zenerdiode, die das Gate des Thyristors steuert. Bei einem anomalen Betriebszustand schaltet der Thyristor durch und entzieht einem Schalttransistor des Wechselrichters das Steuersignal und bewirkt so eine Stillegung der Schaltungsanordnung. Zur Realisierung dieser Sicherheitsabschaltung werden ein spannungsfester Thyristor sowie mehrere relativ großvolumige ohmsche Widerstände mit einigen Watt Belastbarkeit benötigt, die zur Strombegrenzung im Abschaltfall und zur Erzeugung des Thyristor-Haltestromes dienen. Außerdem müssen sehr robuste Transistoren für die Halbbrücke verwendet werden, nur um der Belastung während des Abschaltvorganges standzuhalten.

Die Offenlegungsschrift DE 43 34 076 beschreibt ebenfalls eine dem Oberbegriff des Patentanspruchs 1 entsprechende Schaltungsanordnung. Sie besteht aus aus einem stromrückgekoppelten Halbbrückenwechselrichter, der mit einer Abschaltvorrichtung ausgestattet ist, die den Wechselrichter bei defekter Lampe abschaltet, indem sie einem Transistor des Wechselrichters das Steuersignal entzieht. Die Abschaltungsvorrichtung enthält als wesentliche Elemente einen Feldeffekt-Transistor, der parallel zur Steuerelektrode des Transistors geschaltet ist, einen bistabilen Multivibrator, der das Gate des Feldeffekt-Transistors ansteuert, und einen Schwellwertschalter, über den der bistabile Multivibrator bei defekter Lampe zurückgesetzt wird, was zum Durchschalten des Feldeffekt-Transistors und damit zur Abschaltung des Wechselrichters führt. Ein Nachteil dieser Schaltungsanordnung besteht darin, daß die Abschaltungsvorrichtung, infolge der technologiebedingt im Feldeffekttransistor vorhandenen Freilaufdiode, eine unsymmetrische Ansteuerung der Wechselrichtertransistoren verursacht. Außerdem besteht, insbesondere bei hohen Betriebstemperaturen der Wechselrichtertransistoren, die Gefahr, daß die an der Steuerstrecke des abzuschaltenden Wechselrichtertransistors anliegende Spannung während des Abschaltvorganges dessen Basis-Emitter-Schwellspannung überschreitet, so daß dieser Wechselrichtertransistor nicht zuverlässig abgeschaltet wird, sondern statt dessen im Linearbereich arbeitet und zerstört werden kann.

Es ist die Aufgabe der Erfindung, eine Schaltungsanordnung zum Betrieb elektrischer Lampen bereitzustellen, die eine gegenüber dem vorgenannten Stand der Technik verbesserte Abschaltungsvorrichtung besitzt, welche im Falle eines anomalen Betriebszustandes wirksam wird und den Wechselrichter abschaltet, sowie ein verbessertes Betriebsverfahren für elektrische Lampen anzugeben.

Diese Aufgabe wird erfindungsgemäß durch die kennzeichnenden Merkmale des Patentanspruchs 1 beziehungsweise des Patentanspruchs 14 gelöst. Besonders vorteilhafte Ausführungen der Erfindung sind in den Unteransprüchen beschrieben.

Die beiden oben als Stand der Technik beschriebenen Schaltungsanordnungen besitzen eine auf demselben Grundprinzip beruhende Abschaltungsvorrichtung für den Wechselrichter. Beide Abschaltungsvorrichtungen entziehen im Falle eines anomalen Betriebszustandes einem der Halbbrückenwechselrichtertransistoren das Steuersignal, indem parallel zur Steuerstrecke ein Nebenschluß geschaltet wird. Die Erfindung beschreitet einen anderen Weg.

Bei der erfindungsgemäßen Schaltungsanordnung weist die Abschaltungsvorrichtung für den Wechselrichter einen Abschalt-Transistor auf, dessen Schaltstrecke ein aktives serielles Element des Steuerstromkreises eines der Wechselrichtertransistoren bildet, d.h. ein Element durch das der gesamte Steuerstrom dieses Wechselrichtertransistors im Normalbetrieb des Wechselrichters fließt. Der Abschalt-Transistor ist vorteilhafterweise ein Feldeffekttransistor, der ohne Leistungsverluste ansteuerbar ist. Unter dem Begriff Steuerkreis wird hier derjenige Stromkreis verstanden, in dem die Steuerstrecke des vorgenannten Wechselrichtertransistors angeordnet ist. Ist dieser Wechselrichtertransistor ein Bipolartransistor, so handelt es sich bei der Steuerstrecke um die Basis-Emitter-Strecke des Wechselrichtertransistors und bei dem Steuerkreis um den Basis-Emitter-Kreis in dem der Steuerstrom, das ist der Basis-Strom des Wechselrichtertransistors, fließt. Ist dieser Wechselrichtertransistor ein Feldeffektransistor, so handelt es sich bei der Steuerstecke um die Gate-Source-Strecke des Wechselrichtertransistors und bei dem Steuerkreis um den Gate-Source-Kreis in dem der Steuerstrom, das ist der Gate-Strom des Wechselrichtertransistors, fließt. Mit Hilfe des zur Abschaltungsvorrichtung gehörenden Abschalt-Transistors wird der gesamte Steuerkreis des betreffenden Wechselrichtertransistors zwischen einem niederohmigen Zustand ―das entspricht dem Normalbetrieb― und einem hochohmigen Zustand ―im Falle eines anomalen Betriebszustandes― geschaltet. Dabei ist die Schaltstrecke des Abschalt-Transistors der Abschaltungsvorrichtung entweder in der Emitter- bzw. Source-Leitung des betreffenden Wechselrichtertransistors (erstes Ausführungsbeispiel der Erfindung) oder aber in der Basis- bzw. Gate-Leitung des entsprechenden Wechselrichtertransistors (zweites Ausführungsbeispiel der Erfindung) angeordnet. Diese erfindungsgemäße Anordnung des Abschalt-Transistors der Abschaltungsvorrichtung gewährleistet im Falle eines anomalen Betriebszustandes eine zuverlässige Abschaltung des Wechselrichters, die selbst bei hohen Betriebstemperaturen des Wechselrichters, das heißt, bis zur maximal zulässigen Kristalltemperatur der Wechselrichtertransistoren und des Abschalt-Transistors, noch einwandfrei funktioniert.

Während des Normalbetriebes ist die Schaltstrecke ―das ist die Drain-Source-Strecke― des Abschalt-Transistors der Abschaltungsvorrichtung und damit auch der Steuerkreis des betreffenden Wechselrichtertransistors niederohmig. Nach dem Auftreten eines anomalen Betriebszustandes wird die Schaltstrecke des Abschalt-Transistors und damit auch der Steuerkreis des betreffenden Wechselrichtertransistors hochohmig. Dieses Umschalten in den hochohmigen Zustand erfolgt vorteilhafterweise synchron zur Sperrphase des entsprechenden Wechselrichtertransistors, mit dem der Feldeffekttransistor verschaltet ist. Dadurch werden die Schalttransistoren des Wechselrichters während des Abschaltvorganges, der von einem Fehlersignalüberwachungsglied eingeleitet wird, sicher geschaltet und nur gering belastet.

Vorteilhafterweise besitzt die erfindungsgemäße Abschaltungsvorrichtung eine bistabile Schalteinrichtung, deren Eingang über einen Schwellwert-und/oder Zeitschalter durch das Fehlersignalüberwachungsglied angesteuert wird, und deren Ausgang mit der Steuer-Elektrode ―das ist die Gate-Elektrode― des Abschalt-Transistor verbunden ist und die durch Führung des Versorgungsstromes über eine Lampenelektrode gewährleistet, daß der Wechselrichter erst nach dem Austausch der defekten Lampe bzw. nach dem erneuten Einschalten der Schaltungsanordnung wieder anschwingen kann. Als bistabile Schalteinrichtung eignen sich vorteilhafterweise ein Thyristor oder eine aus zwei Transistoren aufgebaute Thyristorersatzschaltung oder ein Flip-Flop. Die vorgenannte Thyristorersatzschaltung und der Flip-Flop haben den Vorteil, daß sie in integrierter C-MOS-Technik realisert werden können.

Das Abschaltsignal wird vorteilhafterweise von zwei sich überlagernden Komponenten gebildet. Das Fehlersignalüberwachungsglied, das wechselstrommäßig parallel zu der bzw. zu den Lampen geschaltet ist und die Lampenspannung überwacht, erzeugt eine Gleichspannung, die proportional zur Lampenspannung ist. Diese Gleichspannung bildet die erste Komponente des Abschaltsignals. Ihr wird vorteilhafterweise noch ein Synchronisationssignal überlagert, das von einer Synchronisationsvorrichtung, die Bestandteil des Fehlersignalüberwachungsgliedes ist, erzeugt wird und die zweite Komponente des Abschaltsignals formt. Dieses Synchronisationssignal ist vorteilhafterweise proportional zur zeitlichen Änderung der Spannung am Mittenabgriff der Wechselrichter-Schalttransistoren bzw. zur Zeitableitung der Wechselrichterausgangsspannung. Dadurch gewährleistet die Synchronisationsvorrichtung, daß die im Störfall auftretende Abschaltung während der Sperrphase desjenigen Wechselrichtertransistors erfolgt, in dessen Steuerkreis der Abschalt-Transistor der Abschaltungsvorrichtung angeordnet ist.

Das Fehlersignalüberwachungsglied weist vorteilhafterweise einen Kondensator, eine Gleichrichterdiode und ein RC-Integrationsglied auf. Die Synchronisationsvorrichtung enthält vorteilhafterweise eine CR-Reihenschaltung, die mit dem Mittenabgriff des Wechselrichters und mit dem Kondensator des Fehlersignalüberwachungsgliedes sowie über einen Schwellwert-und/oder Zeitschalter mit dem Eingang der bistabilen Schalteinrichtung verbunden ist.

Nachstehend wird die Erfindung anhand zweier bevorzugter Ausführungsbeispiele näher erläutert. Es zeigen:
- Figur 1: eine Schaltskizze der erfindungsgemäßen Schaltungsanordnung entsprechend des ersten Ausführungsbeispiels
- Figur 2: eine Schaltskizze der erfindungsgemäßen Schaltungsanordnung entsprechend des zweiten Ausführungsbeispiels

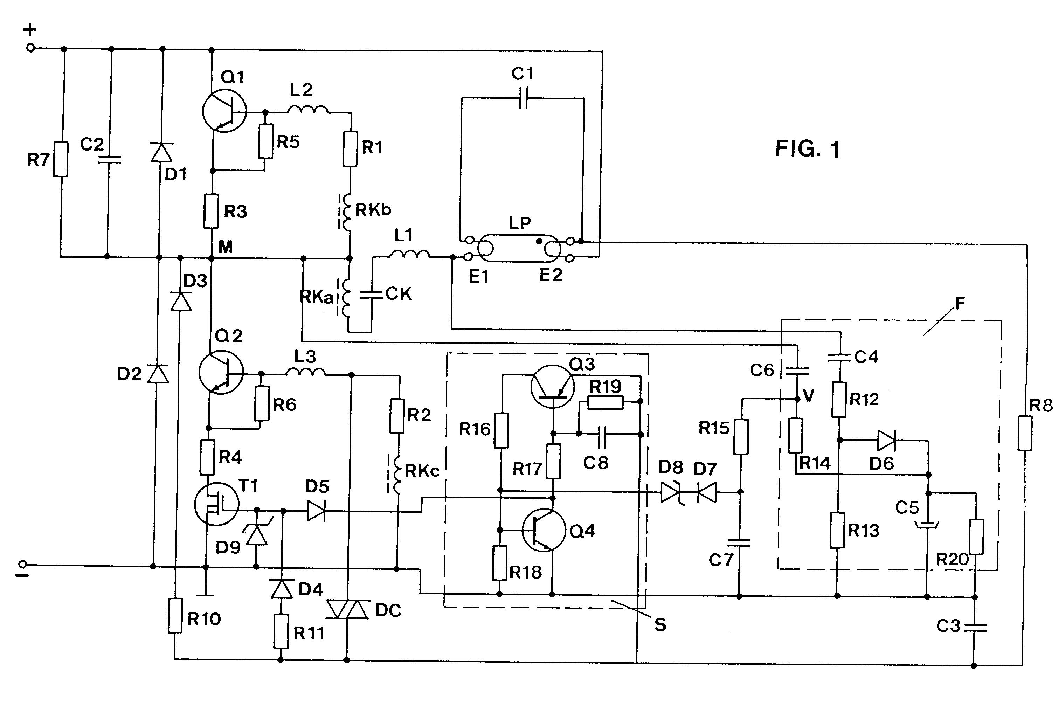

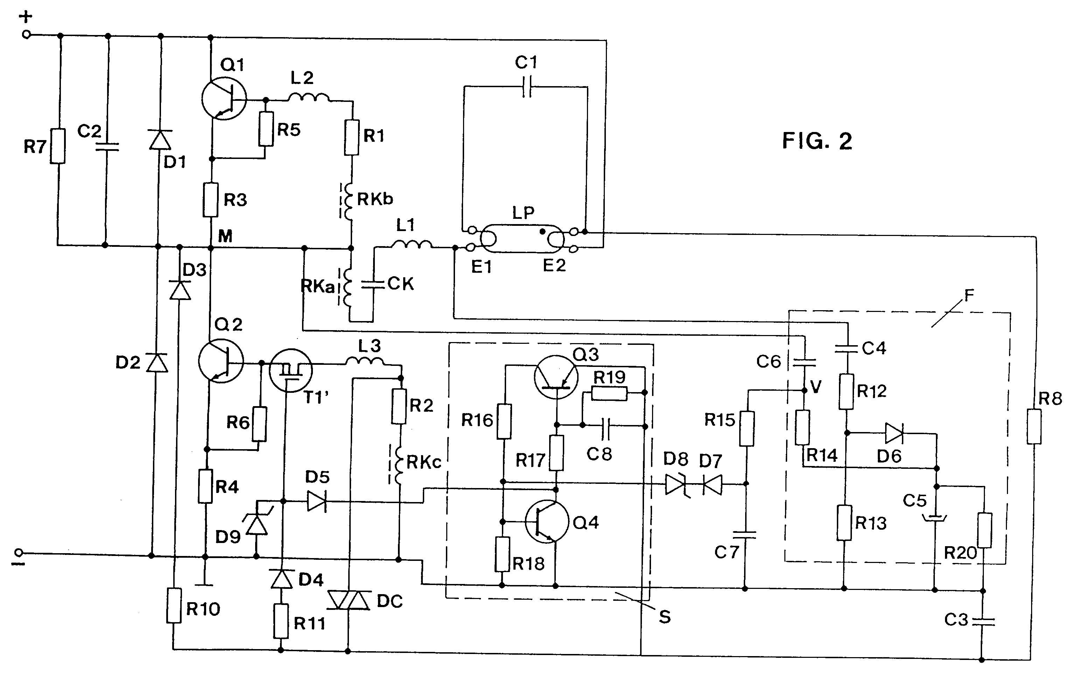

Beide Ausführungsbeispiele unterscheiden sich nur durch die Anordnung der Abschalt-Transistoren T1, T1' der erfindungsgemäßen Abschaltvorrichtung. Aus diesem Grund werden in den Figuren 1 und 2 für die identischen Bauteile beider Ausführungsbeispiele dieselben Bezugszeichen verwendet.

Die in der Figur 1 abgebildete Schaltungsanordnung gemäß des ersten Ausführungsbeispiels dient zum Betrieb einer 58 W-Leuchtstofflampe LP. Diese Schaltungsanordnung besitzt einen mit zwei Bipolartransistoren Q1, Q2 bestückten Halbbrückenwechselrichter. Beide Bipolartransistoren Q1, Q2 sind jeweils mit einer Freilaufdiode D1, D2 ausgestattet, die parallel zur Kollektor-Emitter-Strecke des entsprechenden Transistors Q1, Q2 geschaltet sind. Außerdem besitzen beide Bipolartransistoren Q1, Q2 jeweils einen Emitterwiderstand R3, R4 und einen Basis-Emitter-Parallelwiderstand R5, R6. Parallel zur Kollektor-Emitter-Strecke des Transistors Q1 sind ferner ein ohmscher Widerstand R7 und eine Kapazität C2 geschaltet.

Die Ansteuerung der beiden Schalttransistoren Q1, Q2 der Halbbrücke erfolgt mittels eines Ringkerntransformators, der eine Primärwicklung RKa und zwei Sekundärwicklungen RKb, RKc besitzt. Die Primärwicklung RKa ist in den Serienresonanzkreis des Halbbrückenwechselrichters integriert, der am Mittenabgriff M des Wechselrichters angeschlossen ist und den Kopplungskondensator CK, die Resonanzinduktivität L1 sowie den Resonanzkondensator C1 enthält. Die Sekundärwicklungen RKb, RKc sind jeweils in den Basis-Emitter-Kreis eines Wechselrichtertransistors Q1, Q2 integriert und jeweils über einen Basisvorwiderstand R1, R2 und eine Induktivität L2, L3 mit dem Basisanschluß des betreffenden Bipolartransistors Q1, Q2 verbunden. Der Halbbrückenwechselrichter besitzt ferner eine Startvorrichtung, die im wesentlichen aus dem Diac DC und dem Startkondensator C3 besteht. Der Diac DC ist über die Induktivität L3 mit dem Basisanschluß des Wechselrichtertransistors Q2 verbunden. Der Startkondensator C3 ist an den Minuspol der Wechselrichtergleichspannungsversorgung und über einen ohmschen Widerstand R10 und eine Gleichrichterdiode D3 an den Mittenabgriff M der Halbbrücke angeschlossen.

Die zu betreibenden Leuchtstofflampe LP ist parallel zum Resonanzkondensator geschaltet. Ein Anschluß der ersten Elektrodenwendel El der Lampe LP ist an die Resonanzinduktivität L1 angeschlossen, während der andere Anschluß der ersten Elektrodenwendel E1 mit Resonanzkondensator verbunden ist. Ein Anschluß der zweiten Lampenelektrodenwendel E2 ist zum Pluspol der Wechselrichtergleichspannungsversorgung geführt und der andere Anschluß der zweiten Lampenelektrodenwendel ist über einen ohmschen Widerstand R8 mit dem Minuspol der Wechselrichtergleichspannungsversorgung verbunden.

Soweit entspricht die Schaltungsanordnung einem Halbbrückenwechselrichter wie er beispielsweise auf den Seiten 62-63 des Buches _{"}Schaltnetzteile" von W. Hirschmann/ A. Hauenstein, Herausgeber Siemens AG, beschrieben ist. Nach dem Einschalten lädt sich der Startkondensator C3 auf die Durchbruchsspannung des Diacs DC auf, der dann Triggerimpulse für die Basis des Bipolartransistors Q2 erzeugt und dadurch das Anschwingen des Halbbrückenwechselrichters veranlaßt. Nach dem Durchschalten des Transistors Q2 wird der Startkondensator C3 über den Widerstand R10 und die Diode D3 soweit entladen, daß der Diac DC keine weiteren Triggerimpulse generiert. Die beiden Wechselrichtertransistoren Q1, Q2 schalten alternierend, so daß der Mittenabgriff M der Halbbrücke abwechselnd mit dem Plus- oder Minuspol der Gleichspannungsversorgung verbunden ist. Das hierdurch bedingte Umladen des Kopplungskondensators CK verursacht im Serienresonanzkreis in der Lampe LP einen mittelfrequenten Wechselstrom, dessen Frequenz mit der Schaltfrequenz des Halbbrückenwechselrichters übereinstimmt.

In die Emitterleitung des zweiten Halbbrückentransistors Q2 ist ein als Abschalt-Transistor für den Wechselrichter dienender Feldeffekttransistor T1 geschaltet, der ein wesentliches Bestandteil der erfindungsgemäßen Abschaltungsvorrichtung ist. Das Drain dieses Feldeffekttransistors T1 ist über den Emitterwiderstand R4 mit dem Emitter des Schalttransistors Q2 verbunden. Der Source-Anschluß des Feldeffekttransistors T1 ist an den Minuspol der Gleichspannungsversorgung des Wechselrichters angeschlossen. Im Normalbetrieb ist die Drain-Source-Strecke des Feldeffekttransistors T1 und damit auch der Basis-Emitter-Kreis des Bipolartransistors Q2 niederohmig. Der Basis-Emitter-Kreis des Bipolartransistors Q2 enthält die Sekundärwicklung RKc des Ringkerntransformators, den Basisvorwiderstand R2, die Induktivität L3, die Basis-Emitter-Strecke des Bipolartransistors Q2, den Emitterwiderstand R4 und die Drain-Source-Strecke des Feldeffekttransistors T1. Der Feldeffekttransistor T1 wird beim Einschalten der Schaltungsanordnung über den Einschaltwiderstand R11 und die Diode D4, die zum Gate des Feldeffekttransistors T1 geführt ist, vor dem Starten des Wechselrichters niederohmig gesteuert. Das Gate des Feldeffekttransistors T1 ist ferner über eine Diode D5 mit dem Ausgang einer bistabilen Schalteinrichtung S verbunden, deren Eingang ihrerseits an den Ausgang eines wechselstrommäßig parallel zur Lampe LP geschalteten Fehlerüberwachungsgliedes F, angeschlossen ist. Parallel zur Gate-Source-Strecke des Feldeffekttransistors T1 ist eine Zenerdiode D9 geschaltet, die den Spannungsabfall auf ca. 12 V begrenzt. Die vorgenannte bistabile Schalteinrichtung S und das Fehlerüberwachungsglied F gehören ebenfalls zur erfindungsgemäßen Abschaltungsvorrichtung, die im Falle eines anomalen Betriebszustandes den Feldeffekttransistor T1 und damit auch den Basis-Emitterkreis des Wechselrichterstransistors Q2 hochohmig steuert. Dadurch wird die Schwingung des Halbbrückenwechselrichters unterbrochen. Die Abschaltung erfolgt synchron zur Sperrphase des Schalttransistors Q2. Das Abschaltungssignal setzt sich additiv aus zwei Spannungskomponenten zusammen.

Die erste Spannungskomponente ist eine geglättete Spannung, die proportional zur Lampenspannung ist. Diese Spannungskomponente wird mit Hilfe des RC-Integrationsgliedes R12, R13, C4, der Gleichrichterdiode D6 und des Kondensators C5 generiert. Diese vorgenannten Bauteile R12, C4, R13, C5, D6 sind wechselstrommäßig parallel zur Entladungsstrecke der Lampe LP angeordnet. Ein Anschluß des Kondensators C4 ist mit der Elektrodenwendel E1 der Lampe verbunden, während sein anderer Anschluß über die Widerstände R12, R13 zum Source-Anschluß des Feldeffekttransistors T1 bzw. zum Minusspol der Wechselrichtergleichspannungsversorgung geführt ist. Ein zwischen den Widerständen R12, R13 gelegener Verzweigungspunkt ist über die Gleichrichterdiode D6 mit einem Pol des Kondensators C5 verbunden. Der andere Pol des Kondensators C5 ist an den Minusspol der Wechselrichtergleichspannungsversorgung angeschlossen. Der Spannungsteiler R12, R13 teilt die an der Lampe LP anliegende Spannung. Dieses heruntergeteilte Spannungssignal wird dem Kondensator C5 über die Gleichrichterdiode D6 zugeführt und im Kondensator C5 integriert. Der Kondensator C5 glättet dieses Spannungssignal, so daß am Kondensator C5 eine Gleichspannung anliegt, die proportional zur Lampenspannung ist. Diese geglättete Gleichspannung bildet die erste Komponente des Abschaltsignals.

Bei der zweiten Komponente des Abschaltsignals handelt es sich um ein Synchronisationssignal, das proportional zur zeitlichen Ableitung der Wechselrichterausgansspannung am Mittenabgriff M ist und das von einer Synchronisationsvorrichtung erzeugt wird, die Bestandteil des Fehlerüberwachungsgliedes ist. Die Synchronisationsvorrichtung besteht im wesentlichen aus einer CR-Reihenschaltung C6, R14, die ein CR-Differenzierglied C6, R14 bildet. Der Kondensator C6 des Differenziergliedes ist direkt an den Mittenabgriff M der Halbbrücke angeschlossen, während der Widerstand R14 des Differenziergliedes direkt mit einem Pol des Kondensators C5 verbunden ist.

Der Mittenabgriff V des Differenziergliedes C6, R14 ist über ein Tiefpaßfilter R15, C7, eine Gleichrichterdiode D7 und eine Zenerdiode D8 zum Eingang der bistabilen Schalteinrichtung geführt. Das Differenzierglied C6, R14 differenziert die am Mittenabgriff M anliegende trapezförmige Ausgangsspannung des Wechselrichters und erzeugt dadurch am Widerstand R14 eine Rechteckspannung, die die zweite Komponente des Abschaltsignals formt. Die positive Halbwelle der Rechteckspannung wird durch die ansteigende Flanke und die negative Halbwelle der Rechteckspannung wird durch die abfallende Flanke der trapezförmigen Wechselrichterausgangsspannung erzeugt. Die ansteigenden Flanke der trapezförmigen Wechselrichterausgangsspannung entsteht während des Beginns der Sperrphase des Bipolartransistors Q2, während die abfallenden Flanke der trapezförmigen Wechselrichterausgangsspannung zu Beginn der Sperrphase des Bipolartransistors Q1 entsteht.

Am Mittenabgriff V des Differenziergliedes liegt das gesamte Abschaltsignal an, das sich additiv aus dem Spannungsabfall über dem Kondensator C5 und dem Spannungsabfall über dem Widerstand R14 zusammensetzt. Das am Abgriff V anliegende Abschaltsignal wird über das Tiefpaßfilter R15, C7, die Gleichrichterdiode D7 und die Zenerdiode D8 der bistabilen Schalteinrichtung zugeführt. Die Zenerdiode D8 und die vorgenannten Bauteile des Fehlerüberwachungsgliedes sind so dimensioniert, daß im Normalbetrieb die kritische Schwellenspannung der Zenerdiode D8, die ca. 27V beträgt, unterschritten wird und die bistabile Schalteinrichtung deaktiviert bleibt. Ein anomaler Betriebszustand, der beispielsweise durch eine defekte Lampe oder durch eine Lampe mit altersbedingter erhöhter Brennspannung hervorgerufen wird, hat einen erhöhten Spannungsabfall am Kondensator C5 zur Folge. Die positiven Spannungsspitzen des Abschaltsignals, die von den positiven, der Kondensatorspannung an C5 aufaddierten Halbwellen der Rechteckspannung des Differenziergliedes geformt werden, überschreiten dann die Schwellenspannung der Zenerdiode D8 und aktivieren die bistabile Schalteinrichtung, durch die der Feldeffekttransistor T1 und damit auch der Basis-Emitter-Kreis des Bipolartransistors Q2 dann hochohmig gesteuert wird. Der Halbbrückenwechselrichter wird dadurch stillgelegt und kann erst durch erneutes Einschalten oder durch Austausch der defekten Lampe neu gestartet werden.

Die bistabile Abschalteinrichtung besteht aus zwei Bipolartransistoren Q3, Q4, Widerständen R16, R17, R18, R19 und einem Kondensator C8 die eine Thyristor-Ersatzschaltung bilden. Die Funktionsweise einer aus zwei Bipolartransistoren bestehenden Thyristor-Ersatzschaltung ist beispielsweise auf den Seiten 395-396 im Buch _{"}Bauelemente der Elektronik und ihre Grundschaltungen" von H. Höger, F. Kähler, G. Weigt aus der Reihe ,,Einführung in die Elektronik" Bd. 1, Verlag H. Stam GmbH, 7. Auflage beschrieben. Im Normalbetrieb sind die beiden Bipolartransistoren Q3, Q4 gesperrt und die bistabile Schalteinrichtung ist deaktiviert, so daß die Drain-Source-Strecke des Feldeffekttransistors T1 über den Einschaltwiderstand R11 und die Diode D4 eingeschaltet, das heißt niederohmig bleibt. Nach Auftreten eines anomalen Betriebszustandes überschreitet das Abschaltsignal die Schwellenspannung der Zenerdiode D8 und kippt die Transistoren Q3, Q4 in den leitenden Zustand. Dadurch ist das Gate des Feldeffekttransistors T1 über die Diode D5 und die nun leitfähige Kollektor-Emitter-Strecke des Transistors Q4 mit dem Minuspol der Wechselrichtergleichspannungsversorgung verbunden. Der Feldeffekttransistor T1 geht somit in den sperrenden Zustand über, das heißt sein Drain-Source-Strecke und damit auch der Basis-Emitter-Kreis des Wechselrichtertransistors Q2 werden hochohmig und führen zur Abschaltung des Wechselrichters. Der Kondensator C5 der Abschaltungsvorrichtung entlädt sich über den parallel geschalteten hochohmigen Widerstand R20. Eine geeignete Dimensionierung der verwendeten Bauteile ist in der Tabelle angegeben.

Das in Figur 2 dargestellte zweite Ausführungsbeispiel der Erfindung unterscheidet sich vom ersten Ausführungsbeispiel nur durch den Feldeffekttransistor T1' der Abschaltungsvorrichtung. Der Feldeffekttransistor T1' der Abschaltungsvorrichtung gemäß des zweiten Ausführungsbeispiels ist in der Basis-Leitung des Wechselrichtertransistors Q2 angeordnet, während beim ersten Ausführungsbeispiel der Feldeffekttransistors T1 der Abschaltungsvorrichtung in der Emitter-Leitung des Wechselrichtertransistors Q2 angeordnet ist. Dabei ist der Source-Anschluß des Feldeffekttransistors T1' direkt mit dem Basis-Anschluß des Bipolartransistors Q2 verbunden, während sein Drain-Anschluß an die Induktivität L3 angeschlossen ist. Der Basis-Emitter-Kreis des Bipolartransistors Q2 enthält hier die Sekundärwicklung RKc des Ringkerntransformators, den Basisvorwiderstand R2, die Induktivität L3, die Drain-Source-Strecke des Feldeffekttransistors T1',die Basis-Emitter-Strecke des Bipolartransistors Q2 und den Emitterwiderstand R4.

Der Feldeffekttransistor T1' wird beim Einschalten der Schaltungsanordnung über den Einschaltwiderstand R11 und die Diode D4, die zum Gate des Feldeffekttransistors T1' geführt ist, vor dem Starten des Wechselrichters niederohmig gesteuert. Das Gate des Feldeffekttransistors T1' ist ferner über die Diode D5 mit dem Ausgang der bistabilen Schalteinrichtung S verbunden, deren Eingang ihrerseits an den Ausgang des wechselstrommäßig parallel zur Lampe LP geschalteten Fehlerüberwachungsgliedes F, angeschlossen ist. Parallel zur Gate-Source-Strecke des Feldeffekttransistors T1' ist eine Zenerdiode D9 geschaltet, die den Spannungsabfall auf ca. 12 V begrenzt. Die vorgenannte bistabile Schalteinrichtung S und das Fehlerüberwachungsglied F sind identisch ausgeführt wie die gleichbezeichneten Bauteile des ersten Ausführungsbeispiels und haben auch dieselbe Funktionsweise. Im Falle eines anomalen Betriebszustandes steuern sie den Feldeffekttransistor T1 und damit auch den Basis-Emitterkreis des Wechselrichtertransistors Q2 hochohmig. Dadurch wird die Schwingung des Halbbrükkenwechselrichters unterbrochen. Die Abschaltung erfolgt synchron zur Sperrphase des Schalttransistors Q2, wie bereits bei der Beschreibung des ersten Ausführungsbeispiels erläutert wurde.

Die übrigen, noch nicht erwähnten Bauteile des zweiten Ausführungsbeispiels stimmen mit den gleichbezeichneten Bauteilen des ersten Ausführungsbeispiels überein. Auch die Funktionsweise dieser Bauteile stimmt mit der Funktionsweise der entsprechenden Bauteile des ersten Ausführungsbeispiels überein.

Die Erfindung beschränkt sich nicht auf die oben näher beschriebenen Ausführungsbeispiele. Als bistabile Abschaltungsvorrichtung kann beispielsweise auch ein Thyristor oder ein Flip-Flop verwendet werden. Außerdem kann die Schaltungsanordnung parallel zur Lampe LP einen Heizkreis zur Vorheizung der Elektrodenwendeln E1, E2 der Lampe LP aufweisen. Ferner ist die erfindungsgemäße Schaltungsanordnung auch zum Betrieb mehrerer in Serie geschalteter Lampen geeignet.

**Tabelle:**

| Dimensionierung der in den Figuren abgebildeten elektronischen Bauteile gemäß der bevorzugten Ausführungsbeispiele | |
|---|---|
| R1, R2 | 8,2 Ω |
| R3 | 0,47 Ω |
| R4 | 0,39 Ω |
| R5, R6 | 33 Ω |
| R7 | 3,3 MΩ |
| R8 | 1,12 MΩ |
| R10 | 22 kΩ |
| R11 | 330 kΩ |
| R12 | 978 kΩ |
| R13 | 100 kΩ |
| R14 | 20 Ω |
| R15 | 2,2 kΩ |
| R16, R17, R18, R19 | 10 kΩ |
| R20 | 4,7 MΩ |
| C1 | 7,5 nF |
| C2 | 1,5 nF |
| C3 | 100 nF |
| C4 | 100 pF |
| C5 | 1 µF |
| C6 | 33 pF |
| C7, C8 | 560 pF |
| CK | 330 nF |
| L1 | 1,25 mH |
| L2, L3 | 4,7 µH |
| D1, D2, D3 | 1N4946GP |
| D4, D5, D6, D7 | LL4148 |
| DC | 1N413M |
| Q1, Q2 | BUF644 |
| Q3 | BC857A |
| Q4 | BC847A |
| T1, T1' | STK14N05 |
| RK | Ringkern R 8/4/3,8 |

## Patentansprüche

1. Schaltungsanordnung zum Betrieb von elektrischen Lampen, wobei die Schaltungsanordnung folgende Merkmale aufweist:
- einen Wechselrichter mit mindestens zwei alternierend schaltenden Schalttransistoren (Q1, Q2),
- eine Ansteuerungsvorrichtung für die Transistoren (Q1, Q2) des Wechselrichters,
- eine Abschaltungsvorrichtung, die einen Abschalt-Transistor (T1, T1') aufweist, durch den der Wechselrichter (Q1, Q2) nach dem Auftreten eines anomalen Betriebzustandes abgeschaltet wird,
dadurch gekennzeichnet, daß
- die Schaltstrecke des Abschalt-Transistors (T1, T1') im Steuerkreis eines Schalttransistors (Q2) des Wechselrichters angeordnet ist, wobei die Schaltstrecke des Abschalt-Transistors (T1, T1') im Normalbetrieb des Wechselrichters niederohmig ist und nach dem Auftreten eines anomalen Betriebszustandes des Wechselrichters hochohmig wird,
- die Abschaltungsvorrichtung ein Fehlersignalüberwachungsglied (F) aufweist, das dynamisch parallel, das heißt wechselstrommäßig parallel, zu der bzw. den elektrischen Lampen (LP) geschaltet ist und den Spannungsabfall über den Lampenanschlüssen überwacht,
- das Fehlersignalüberwachungsglied (F) eine Synchronisationsvorrichtung aufweist, die die Abschaltungsvorrichtung mit dem Schaltzyklus des Wechselrichters (Q1, Q2) synchronisiert.

2. Schaltungsanordnung zum Betrieb von elektrischen Lampen nach Anspruch 1, dadurch gekennzeichnet, daß der Abschalt-Transistor (T1, T1') ein Feldeffekttransistor ist.

3. Schaltungsanordnung zum Betrieb von elektrischen Lampen nach Anspruch 1, dadurch gekennzeichnet, daß die Schaltstrecke des Abschalt-Transistors (T1) in der Emitter-Leitung des Schalttransistors (Q2) des Wechselrichters angeordnet ist.

4. Schaltungsanordnung zum Betrieb von elektrischen Lampen nach Anspruch 1, dadurch gekennzeichnet, daß die Schaltstrecke des Abschalt-Transistors (T1') in der Basis-Leitung des Schalttransistors (Q2) des Wechselrichters angeordnet ist.

5. Schaltungsanordnung zum Betrieb von elektrischen Lampen nach Anspruch 1, dadurch gekennzeichnet, daß die Abschaltungsvorrichtung eine bistabile Schalteinrichtung (S) aufweist, deren Eingang über einen Schwellwert- (D8) und/oder Zeitschalter durch das Fehlersignalüberwachungsglied (F) angesteuert wird, und deren Ausgang mit der Steuer-Elektrode des Abschalt-Transistor (T1, T1') verbunden ist.

6. Schaltungsanordnung zum Betrieb von elektrischen Lampen nach den Ansprüchen 1 bis 5, dadurch gekennzeichnet, daß die Synchronisationsvorrichtung mit dem Mittenabgriff (M) zwischen den Schalttransistoren (Q1, Q2) des Wechselrichters und über einen Schwellwert- (D8) und/oder Zeitschalter mit dem Eingang der bistabilen Schalteinrichtung (S) verbunden ist.

7. Schaltungsanordnung zum Betrieb von elektrischen Lampen nach den Ansprüchen 1 bis 5, dadurch gekennzeichnet, daß dem Fehlersignalüberwachungsglied (F) ein RC-Tiefpaß (R15, C7) und eine Gleichrichterdiode (D7) nachgeschaltet sind, über die der Ausgang des Fehlersignalüberwachungsgliedes (F) mit dem Eingang der bistabilen Schalteinrichtung (S) und mit der Synchronisationsvorrichtung verbunden ist.

8. Schaltungsanordnung zum Betrieb von elektrischen Lampen nach Anspruch 1, dadurch gekennzeichnet, daß das Fehlersignalüberwachungsglied (F) zumindest einen Kondensator (C5) aufweist, an dem eine Gleichspannung anliegt, die proportional zu der gemittelten, gleichgerichteten Lampenspannung ist.

9. Schaltungsanordnung zum Betrieb von elektrischen Lampen nach Anspruch 8, dadurch gekennzeichnet, daß das Fehlersignalüberwachungsglied (F) einen Kondensator (C5), eine Gleichrichterdiode (D6) und ein RC-Integrationsglied (R12, C4) aufweist.

10. Schaltungsanordnung zum Betrieb von elektrischen Lampen nach den Ansprüchen 1 und 5, dadurch gekennzeichnet, daß die bistabile Schalteinrichtung (S) eine zwei Transistoren (Q3, Q4) aufweisende Thyristor-Ersatzschaltung ist.

11. Schaltungsanordnung zum Betrieb von elektrischen Lampen nach den Ansprüchen 1 und 5, dadurch gekennzeichnet, daß die bistabile Schalteinrichtung einen Thyristor aufweist.

12. Schaltungsanordnung zum Betrieb von elektrischen Lampen nach den Ansprüchen 1 und 5, dadurch gekennzeichnet, daß die bistabile Schalteinrichtung ein Flip-Flop aufweist.

13. Schaltungsanordnung zum Betrieb von elektrischen Lampen nach den Ansprüchen und 6, dadurch gekennzeichnet, daß die Synchronisationsvorrichtung eine aus wenigstens einem Kondensator (C6) und einem Widerstand (R14) bestehende CR-Reihenschaltung aufweist, die mit dem Mittenabgriff (M) des Wechselrichters (Q1, Q2) und mit dem Kondensator (C5) des Fehlersignalüberwachungsgliedes (F) sowie über einen Schwellwert- (D8) und/oder Zeitschalter mit dem Eingang der bistabilen Schalteinrichtung (S) verbunden ist.

14. Betriebsverfahren für elektrische Lampen an einer Schaltungsanordnung, die einen Wechselrichter mit mindestens zwei alternierend schaltenden Schalttransistoren (Q1, Q2), eine Ansteuerungsvorrichtung für die Transistoren (Q1, Q2) des Wechselrichters sowie eine Abschaltungsvorrichtung umfaßt, die einen Abschalt-Transistor (T1, T1') aufweist, durch den der Wechselrichter nach dem Auftreten eines anomalen Betriebzustandes abgeschaltet wird,
dadurch gekennzeichnet, daß die Schaltstrecke des Abschalt-Transistors (T1, T1') im Steuerkreis eines Wechselrichter-Schalttransistors (Q2) angeordnet ist, wobei die Schaltstrecke des Abschalt-Transistors (T1, T1') im Normalbetrieb niederohmig ist und nach dem Auftreten eines anomalen Betriebszustandes mit Hilfe eines Abschaltsignals hochohmig gesteuert wird, und wobei nach dem Auftreten eines anomalen Betriebszustandes das Abschaltsignal für den Abschalt-Transistor (T1, T1') synchron zur Sperrphase desjenigen Wechselrichter-Schalttransistors (Q2) erfolgt, in dessen Steuerkreis der Abschalt-Transistor (T1, T1') angeordnet ist.

15. Betriebsverfahren nach Anspruch 14, dadurch gekennzeichnet, daß das Abschaltsignal von zwei überlagerten Spannungskomponenten gebildet wird, wobei die erste Spannungskomponente eine Gleichspannung ist, die proportional zur Lampenspannung ist, und wobei die zweite Spannungskomponente proportional zur zeitlichen Änderung der Spannung am Mittenabgriff (M) der Wechselrichter-Schalttransistoren (Q1, Q2) ― das heißt, proportional zur Zeitableitung der Wechselrichter-Ausgangsspannung ― ist.

16. Betriebsverfahren nach Anspruch 14, dadurch gekennzeichnet, daß das Abschaltsignal der Steuer-Elektrode des Abschalt-Transistors (T1, T1') über einen Schwellwertschalter (D8) mit nachgeschalteter bistabiler Schalteinrichtung (S) zugeführt wird.

## Claims

1. Circuit arrangement for operating electric lamps, the circuit arrangement having the following features:
- an inverter with at least two alternately switching switching transistors (Q1, Q2),
- a drive device for the transistors (Q1, Q2) of the inverter, and
- a switch-off device which has a switch-off transistor (T1, T1') by means of which the inverter (Q1, Q2) is switched off after the occurrence of an anomalous operating state,
characterized in that
- the switching junction of the switch-off transistor (T1, T1') is arranged in the control circuit of a switching transistor (Q2) of the inverter, the switching junction of the switch-off transistor (T1, T1') being of low resistance in normal operation of the inverter and of high resistance after the occurrence of an anomalous operating state of the inverter,
- the switch-off device has an error signal monitoring element (F) which is connected dynamically in parallel, that is to say in parallel in terms of alternating current, to the electric lamp or lamps (LP) and monitors the voltage drop across the lamp terminals, and
- the error signal monitoring element (F) has a synchronization device which synchronizes the switch-off device with the operating cycle of the inverter (Q1, Q2).

2. Circuit arrangement for operating electric lamps according to Claim 1, characterized in that the switch-off transistor (T1, T1') is a field-effect transistor.

3. Circuit arrangement for operating electric lamps according to Claim 1, characterized in that the switching junction of the switch-off transistor (T1) is arranged in the emitter line of the switching transistor (Q2) of the inverter.

4. Circuit arrangement for operating electric lamps according to Claim 1, characterized in that the switching junction of the switch-off transistor (T1') is arranged in the base line of the switching transistor (Q2) of the inverter.

5. Circuit arrangement for operating electric lamps according to Claim 1, characterized in that the switch-off device has a bistable switching device (S) whose input is driven by the error signal monitoring element (F) via a trigger (D8) and/or a time-delay switch, and whose output is connected to the gate electrode of the switch-off transistor (T1, T1').

6. Circuit arrangement for operating electric lamps according to Claims 1 to 5, characterized in that the synchronization device is connected to the centre tap (M) between the switching transistors (Q1, Q2) of the inverter and, via a trigger (D8) and/or time-delay switch, to the input of the bistable switching device (S) .

7. Circuit arrangement for operating electric lamps according to Claims 1 to 5, characterized in that there are connected downstream of the error signal monitoring element (F) an RC low-pass filter (R15, C7) and a rectifier diode (D7) via which the output of the error signal monitoring element (F) is connected to the input of the bistable switching device (S) and to the synchronization device.

8. Circuit arrangement for operating electric lamps according to Claim 1, characterized in that the error signal monitoring element (F) has at least one capacitor (C5) at which a direct voltage is present which is proportional to the averaged, rectified lamp voltage.

9. Circuit arrangement for operating electric lamps according to Claim 8, characterized in that the error signal monitoring element (F) has a capacitor (C5), a rectifier diode (D6) and an RC integration element (R12, C4).

10. Circuit arrangement for operating electric lamps according to Claims 1 and 5, characterized in that the bistable switching device (S) is an equivalent thyristor circuit having two transistors (Q3, Q4).

11. Circuit arrangement for operating electric lamps according to Claims 1 and 5, characterized in that the bistable switching device has a thyristor.

12. Circuit arrangement for operating electric lamps according to Claims 1 and 5, characterized in that the bistable switching device has a flip-flop.

13. Circuit arrangement for operating electric lamps according to Claims 1 and 6, characterized in that the synchronization device has a CR series circuit which comprises at least one capacitor (C6) and one resistor (R14) and which is connected to the centre tap (M) of the inverter (Q1, Q2) and to the capacitor (C5) of the error signal monitoring element (F) as well as, via a trigger (D8) and/or a time-delay switch, to the input of the bistable switching device (S) .

14. Operating method for electric lamps in a circuit arrangement which comprises an inverter with at least two alternately switching switching transistors (Q1, Q2), a drive device for the transistors (Q1, Q2) of the inverter, as well as a switch-off device which has a switch-off transistor (T1, T1'), by means of which the inverter is switched off after the occurrence of an anomalous operating state, characterized in that the switching junction of the switch-off transistor (T1, T1') is arranged in the control circuit of an inverter switching transistor (Q2), the switching junction of the switch-off transistor (T1, T1') being of low resistance in normal operation and being controlled to be of high resistance with the aid of a switch-off signal after the occurrence of an anomalous operating state, the switch-off signal for the switch-off transistor (T1, T1') occuring, after the occurrence of an anomalous operating state, synchronously with the blocking phase of that inverter switching transistor (Q2) in whose control circuit the switch-off transistor (T1, T1') is arranged.

15. Operating method according to Claim 14, characterized in that the switch-off signal is formed by two superimposed voltage components, the first voltage component being a direct voltage which is proportional to the lamp voltage, and the second voltage component being proportional to the temporal change in the voltage at the centre tap (M) of the inverter switching transistors (Q1, Q2) - that is to say, proportional to the time derivative of the inverter output voltage.

16. Operating method according to Claim 14, characterized in that the switch-off signal of the control electrode of the switch-off transistor (T1, T1') is fed via a trigger (D8) with a downstream bistable switching device (S) .

## Revendications

1. Circuit pour faire fonctionner des lampes électriques, dans lequel le circuit comporte les caractéristiques suivantes:
- un onduleur comportant au moins deux transistors (Q1,Q2) de commutation commutés en alternance,
- un dispositif de commande pour les transistors (Q1,Q2) de l'onduleur,
- un dispositif de coupure, qui comporte un transistor (T1,T1') de coupure, par lequel l'onduleur (Q1,Q2) est mis hors circuit après l'apparition d'un état de fonctionnement anormal,
caractérisé en ce que
- la section de circuit du transistor (T1,T1') d'interruption est disposée dans le circuit de commande d'un transistor (Q2) de commutation de l'onduleur, la section de circuit du transistor (T1,T1') de coupure étant, en fonctionnement normal de l'onduleur, à faible résistance ohmique et, après l'apparition d'un état de fonctionnement anormal de l'onduleur, à résistance ohmique élevée,
- le dispositif de coupure comprend un élément (F) de surveillance de signal d'erreur, qui est branché dynamiquement en parallèle, c'est-à-dire en parallèle en ce qui concerne le courant alternatif, à la ou les lampes (LP) électriques et qui surveille la chute de tension aux bornes de la lampe,
- l'élément (F) de surveillance de signal d'erreur comprend un dispositif de synchronisation, qui synchronise le dispositif de coupure avec le cycle de commutation de l'onduleur (Q1,Q2).

2. Circuit pour faire fonctionner des lampes électriques suivant la revendication 1, caractérisé en ce que le transistor (T1,T1') de coupure est un transistor à effet de champ.

3. Circuit pour faire fonctionner des lampes électriques suivant la revendication 1, caractérisé en ce que la section de circuit du transistor (T1) de coupure est disposée dans la ligne d'émetteur du transistor (Q2) de commutation de l'onduleur.

4. Circuit pour faire fonctionner des lampes électriques suivant la revendication 1, caractérisé en ce que la section de circuit du transistor (T1') de coupure est disposée dans la ligne de base du transistor (Q2) de commutation de l'onduleur.

5. Circuit pour faire fonctionner des lampes électriques suivant la revendication 1, caractérisé en ce que le dispositif de coupure comporte un dispositif (S) de commutation bistable, dont l'entrée est attaquée par l'élément (F) de surveillance de signal d'erreur par l'intermédiaire d'un circuit temporisateur et/ou d'un circuit à valeur de seuil (D8), et dont la sortie est reliée à l'électrode de commande du transistor (T1,T1') de coupure.

6. Circuit pour faire fonctionner des lampes électriques suivant l'une des revendications 1 à 5, caractérisé en ce que le dispositif de synchronisation est relié à la prise (M) de milieu entre les transistors (Q1,Q2) de commutation de l'onduleur et par l'intermédiaire d'un circuit temporisateur et/ou à valeur de seuil (D8) à l'entrée du dispositif (S) de commutation bistable.

7. Circuit pour faire fonctionner des lampes électriques suivant l'une des revendications 1 à 5, caractérisé en ce qu'une diode (D7) de redressement et un circuit RC passe-bas (R15,C7) sont montés en aval de l'élément (F) de surveillance de signal d'erreur, la sortie de l'élément (F) de surveillance de signal d'erreur étant reliée par leur intermédiaire à l'entrée du dispositif (S) de commutation bistable et au dispositif de synchronisation.

8. Circuit pour faire fonctionner des lampes électriques suivant la revendication 1, caractérisé en ce que l'élément (F) de surveillance de signal d'erreur comporte au moins un condensateur (C5), auquel est appliqué une tension continue, qui est proportionnelle à la moyenne de la tension de lampe redressée.

9. Circuit pour faire fonctionner des lampes électriques suivant la revendication 8, caractérisé en ce que l'élément (F) de surveillance de signal d'erreur comporte un condensateur (C5), une diode (D6) de redressement et un élément (R12,C4) d'intégration RC.

10. Circuit pour faire fonctionner des lampes électriques suivant les revendications 1 et 5, caractérisé en ce que le dispositif (S) de commutation bistable est un montage équivalent à un thyristor comportant deux transistors (Q3,Q4).

11. Circuit pour faire fonctionner des lampes électriques suivant les revendications 1 et 5, caractérisé en ce que le dispositif de commutation bistable comporte un thyristor.

12. Circuit pour faire fonctionner des lampes électriques suivant la revendication 1 et 5, caractérisé en ce que le dispositif de commutation bistable comporte une bascule bistable.

13. Circuit pour faire fonctionner des lampes électriques suivant la revendication 1 et 6, caractérisé en ce que le dispositif de synchronisation comporte un circuit série (CR) constitué d'au moins un condensateur (C6) et d'une résistance (R14), qui est relié à la prise (M) de milieu de l'onduleur (Q1,Q2) et au condensateur (C5) de l'élément (F) de surveillance de signal d'erreur ainsi que par un circuit temporisateur et/ou à valeur de seuil (D8) à l'entrée du dispositif (S) de commutation bistable.

14. Procédé pour faire fonctionner des lampes électriques dans un circuit, qui comporte un onduleur ayant au moins deux transistors (Q1,Q2) de commutation commutés en alternance, un dispositif de commande pour les transistors (Q1,Q2) de l'onduleur ainsi qu'un dispositif de coupure, qui comporte un transistor (T1,T1') de coupure par lequel l'onduleur est mis hors circuit après l'apparition d'un état de fonctionnement anormal,
caractérisé en ce que le circuit du transistor (T1,T1') de coupure est disposé dans le circuit de commande d'un transistor (Q2) de commutation de l'onduleur, le circuit du transistor (T1,T1') de coupure étant à faible valeur ohmique en fonctionnement normal et étant commandé, après l'apparition d'un état de fonctionnement anormal, à l'aide d'un signal de coupure à forte valeur ohmique, et après l'apparition d'un état de fonctionnement anormal le signal de coupure pour le transistor (T1,T1') de coupure suit de manière synchrone la phase de blocage du transistor (Q2) de commutation d'onduleur respectif, dans le circuit de commande duquel est disposé le transistor (T1,T1') de coupure.

15. Procédé de fonctionnement suivant la revendication 14, caractérisé en ce que le signal de coupure est formé de deux composantes de tension se superposant, la première composante de tension étant une tension continue, qui est proportionnelle à la tension de lampe, et la seconde composante de tension étant proportionnelle à la variation temporelle de la tension à la prise (M) de milieu des transistors (Q1,Q2) de commutation d'onduleur, c'est-à-dire proportionnelle à la dérivé par rapport au temps de la tension de sortie de l'onduleur.

16. Procédé de fonctionnement suivant la revendication 14, caractérisé en ce que le signal de coupure est envoyé à l'électrode de commande du transistor (T1,T1') de coupure par l'intermédiaire d'un commutateur (D8) à valeur de seuil comportant un dispositif (S) de commutation bistable monté en aval.
